# EUROPEAN PATENT APPLICATION

(11) **EP 4 770 277 A1**
(43) Date of publication of application: **01.07.2026**
(21) Application number: 24223780.8
(22) Date of filing: 30.12.2024
(51) Int. Cl.: H05B 47/18, B60Q 1/06, B60Q 1/14, H05B 47/21

(54) **CIRCUIT ARRANGEMENT FOR CONTROLLING LIGHT SOURCES OF A VEHICLE LAMP AND VEHICLE LAMP**

(71) Applicant: OPmobility Lighting Germany GmbH, 80807 München (DE)
(72) Inventor: SVRCEK, Martin, 742 42 Senov u Nového Jicína (CZ)
(74) Representative: LLR

(57) **Abstract**

Vehicle lamp and its circuit arrangement for controlling light sources of a vehicle lamp, comprising:
-a wire interface (1) connected to the vehicle data bus, i.e. the vehicle communication network allowing different electronic control units (ECUs) within the vehicle to exchange data,
-a power supply,
-light sources (3, 6, 8, 10), each controlled by a driver (2', 5, 7, 9) communicating with the vehicle via the data bus, providing main functions selected among: a low beam, a high beam, daytime running lights/position lights, front turn indicators,
-a gateway (2') connected to the data bus.

The gateway (2') manages at least one of the drivers (5, 7, 9) and this driver managed by the gateway is connected to the data bus only via the gateway.

## Description

### Technical field

In the context of automotive lighting, the invention relates to circuit arrangements for operating light sources such as light emitting diodes (LEDs).

### Background art

The development of specialized drivers for managing strings of LEDs, tailored to individual lighting functions, is a response to the growing complexity and specificity of demands in LED applications in the automotive lighting industry, in particular for exterior lighting. LED driving requires precise control and customization to achieve optimal performance and design objectives.

Traditional LED drivers often manage multiple functions simultaneously, which can lead to compromises in efficiency, control precision, and overall performance. To address these issues, it is common to use a modular driver architecture where each string of LEDs is controlled by a dedicated driver specifically designed for a particular lighting function. This approach allows for more precise control of brightness, colour temperature, and dynamic effects, enhancing the functionality and aesthetic appeal of the lighting system.

Recently, the automotive lighting market is demanding that the intelligence and control of advanced lighting functions in HDLP (High-Density Light Projection) be available from the vehicle's BCM (Body Control Module) or zonal controllers.

The usual requirements from car manufacturers are as follows.
- to control all main and signal functions via communication bus,
- to use an interface consisting of power supply line and communication bus,
- to comply with Functional Safety rating of critical or all functions,
- to avoid the use of micro-controllers (uC) or any software.

### Technical problem

This requires the selection of drivers that meet these requirements. Such drivers are more expensive.

In addition, specific software content must be developed for the internal drivers of the HDLP to ensure compatibility with the vehicle BCM, which uses a proprietary protocol that is usually different from the proprietary protocols of the drivers. In other words, all the drivers need to support a common communication interface and target functional safety rating. Such customization requires a lot of work and carries a high risk of bugs and malfunctions.

These requirements lead to an architecture where all the drivers must support a common communication interface and target functional safety rating.

In the traditional approach, since all the drivers are connected to the same communication bus UART via CAN (Controller Area Network, a specific type of communication protocol or language that is commonly used in automotive systems, known for its ability to handle noise and interference, making it well-suited for the harsh environment of a car), it is often decided, at least for safety reasons, to select all drivers from the same supplier. However, independence from a specific manufacturer is preferable, not only for cost savings, but also to guarantee the availability of the components.

### Technical solution

One object of the invention is a **circuit arrangement** for controlling light sources of a vehicle lamp.

Said circuit arrangement comprises:
- a wire interface connected to the vehicle data bus, i.e. the vehicle communication network allowing different electronic control units (ECUs) within the vehicle to exchange data,
- a power supply,
- light sources, each controlled by a driver communicating with the vehicle via the data bus, preferably providing main functions selected among a low beam, a high beam, daytime running lights/position lights, front turn indicators.

The circuit arrangement is characterised it comprises a gateway consisting of an ASIL B driver having UART control, connected to the vehicle data bus, and in that said gateway manages at least one of the drivers and this driver managed by the gateway is connected to the vehicle data bus only via the gateway.

In this description, UART has the usual meaning of Universal Asynchronous Receiver-Transmitter.

In this description, "ASIL B rated" refers to a classification within the Automotive Safety Integrity Level (ASIL) which is part of the ISO 26262 standard for automotive safety. An "ASIL B rated" component indicates that it meets the safety requirements deemed necessary to handle moderate risks. In practice, this means that the system has been designed and tested to perform reliably under certain predefined conditions, and it includes specific safety features that reduce the probability of failure that could lead to accidents. For example, in automotive applications, systems related to active safety features are classified as ASIL B, requiring robust design, fault tolerance, and failure mitigation strategies. According to the invention, "ASIL B rated" means "at least ASIL B rated", i.e. a higher ASIL rating, such as C or D, would also meet the requirement.

According to the invention, the gateway is a communication gateway between the vehicle data bus and the lamp's light sources.

Thanks to the invention, the gateway is positioned between a main controller and an LED function driver, allowing all HDLP functions to be controlled using a single gateway protocol.

The invention allows function activation and failure reporting of the lamp, all performed by the gateway.

By using standard drivers in combination with one or more gateway ICs acting as a communication hub, the cost of the lamp is significantly reduced. In particular, all the light source drivers could be QM rated without the need for a dedicated communication interface. The ASIL B rating could be achieved for all functions with the support of the gateway.

The invention can therefore bring significant savings in the realisation of uC-less HDLPs.

In addition, the solution allows the combination of drivers from different suppliers to be combined in a single HDLP.

The solution can make use of a simple communication protocol that OEMs are already familiar with.

A further advantage of the invention is to reduce the traffic on the vehicle data bus.

Also, thanks to the invention, discrete fault detection circuit can be used where needed. In other words, a dedicated electronic system designed to monitor a light source's performance and detect any malfunctions, such as an open circuit, a short circuit, or degraded functionality, can be connected to the gateway. Here, the term "discrete" indicates that the fault detection is implemented as a separate, stand-alone circuit, rather than being integrated into a central control module.

The invention allows for a wide selection of LED drivers. Indeed, the system is not tied to a specific driver or manufacturer, allowing designers to optimise for cost, performance, or availability when selecting the LED drivers.

Other advantages of the invention include:
- a reduced number of wires for controlling all HDLP functions,
- control of multiple functions with different requirements of power supply with one single vehicle interface protocol,
- UART drive used as communication interface, reducing the need to use micro-controllers in "High-Definition Lighting Performance" (realisation of uC less HDLP) and still allowing control of all lamp functions with desired safety level,
- the gateway acts as the main communication interface, providing control of lamp functions without the need for separate wires to control HDLP functions,
- the gateway controls drivers that do not need to be compatible with the vehicle data bus, increasing the safety of such drivers.

According to a preferred embodiment, the gateway provides a failure detection for light sources.

According to a preferred embodiment, the gateway provides a function activation of the lamp.

According to a preferred embodiment, drivers from different suppliers and/or using different communication protocols are connected to the gateway.

A further object of the invention is a **vehicle lamp** comprising a circuit arrangement as described above.

### Brief description of drawings

The invention will be better understood upon reading the following description, provided only as an illustrative example. The terms "top", "bottom", "front" and "rear" refer to the directions once the vehicle lamp is installed on a vehicle oriented in its usual upright position. The following description is with reference to the attached drawings in which:
[Fig. 1] illustrates the architecture of a vehicle lamp according to the prior art.
[Fig. 2] shows the improvement of the invention according to a first embodiment.
[Fig. 3] shows details of the gateway and its connections.

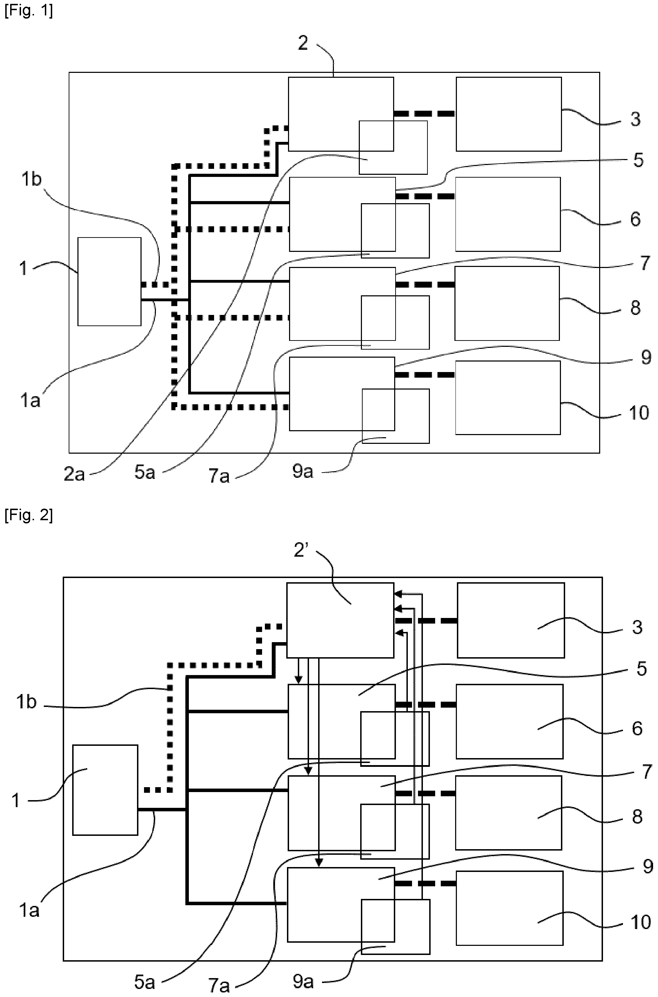

Fig. 1 is a diagram showing a circuit arrangement comprising:
- an interface 1,
- an LED driver 2 for high beam LEDs 3,
- an LED driver 5 for low beam LEDs 6,
- an LED driver 7 for a front turn indicator LED 8,
- an LED driver 9 for daytime running lights/position lights LEDs 10.

The wired interface 1 uses two pairs of cables 1a, 1b: one pair 1a for the power supply, one pair 1b for the vehicle data bus, which embodies the controlled area network allowing the body control module to communicate with the drivers. The interface is connected to each driver 2, 5, 7, 9. Through this connection, the interface 1 provides power and data communication between the vehicle data bus and the LEDs 3, 6, 8, 10.

The four drivers 2, 5, 7, 9 are used to control the LEDs of the special lights. Each of these drivers has a UART interface. It is either QM rated or ASIL B rated.

Failure detection for the other drivers is performed by a specialized circuit 2a, 5a, 7a, 9a for external failure detection.

In the embodiment of Fig.2, the diagram is modified compared to the prior art.

The vehicle data bus 1b is now reduced to a single connection between the interface 1 and an ASIL B driver 2', having UART control.

The ASIL B driver 2', having UART control, acts as a gateway and communicates with each one of the other drivers 5, 7, 9 via a direct UART interface. None of these drivers is directly connected to the vehicle data bus 1b. As shown by the arrows, any communication between a driver 5, 7, 9 and the data bus 1b goes through gateway 2'.

Gateway 2' serves also as a driver for the HB LED string 3, thus providing a function activation of the lamp. Gateway 2' is also provided with an internal failure detection function for the HB LED string 3.

Each other driver 5, 7, 9 still has its own external failure detection function 5a, 7a, 9a. The outputs of these functions are fed back to gateway 2', to control and feedback these functions, as shown by the arrows.

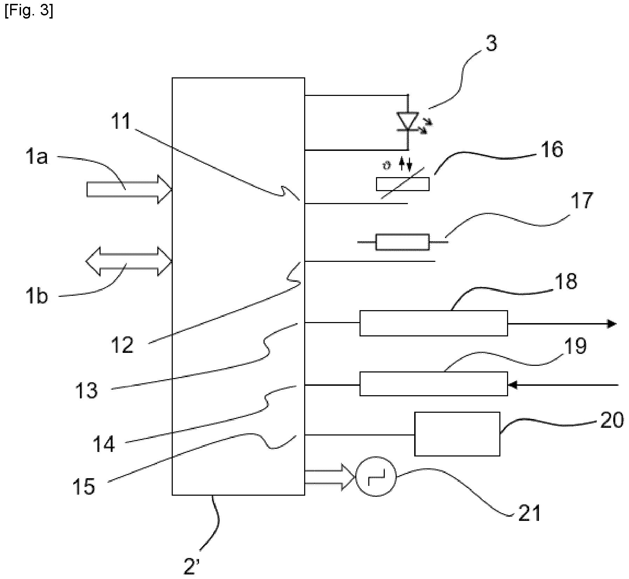

In Fig.3, one can see the details of gateway 2' and the functions performed by said gateway 2'. Gateway 2' receives power and data from the controller area network via the wired connection 1a, 1b.

Gateway 2' is connected to LEDs 3 to perform the control of the string of high beam, according to its primary function.

Gateway 2' has a first GPIO 11 connected to a sensor 16, which returns the colour temperature of the LEDs. Using this measurement, gateway 2' can use a binning control circuit 17, connected to a second GPIO 12, for monitoring that all the LEDs of a same bin, gathering LEDs based on their colour temperature, continue to emit an expected light, to ensure that said LEDs emit light of the same hue.

Another GPIO 13 is connected to a low beam control circuit 18 for the activation of driver 5.

Another GPIO 14 is connected to a low beam diagnostic circuit 19, that feeds back to gateway 2' information provided by failure detection circuit 5a.

Similar control or feedback circuits 20 for other drivers, such as 7 and 9, are connected via other GPIOs, such as 15.

Other lighting functions or diagnostic functions can also be performed by gateway 2', such as a levelling function 21, i.e. a function for controlling a system that adjusts the angle of the headlamps to ensure proper illumination of the road while preventing glare for other drivers.

In addition to providing cost savings by the use of a gateway instead of specific IC devices, the invention also secures the operation of the components of the lamp since the operation of said components is entirely controlled by the gateway without any possibility for the Body Control Module to improperly and erroneously activate any of the components of the lamp. In other words, by using the gateway as the only way to control the light sources of the lamp, as long as the settings of the gateway are correct, there is no possibility of using the lamp in a way that would not comply with legal requirements.

### List of references

1: interface
1a, 1b: pairs of cables
2: high beam LED driver
2a: failure detection circuit
2': gateway = ASIL B driver 2', having UART control
3: high beam LEDs
5: low beam LED driver
5a: failure detection circuit
6: low beam LEDs
7: front turn indicator LED driver
7a: failure detection circuit
8: front turn indicator LED
9: daytime running lights/position lights LED driver
9a: failure detection circuit
10: daytime running lights/position lights LEDs
11, 12, 13, 14, 15: GPIOs
16: colour sensor
17: binning control circuit
18: low beam control circuit
19: low beam diagnostic circuit
20: control or feedback circuits
21: levelling function

## Claims

1. **Circuit arrangement** for controlling light sources (3, 6, 8, 10) of a vehicle lamp, comprising:
- a wire interface (1) connected to the vehicle data bus, i.e. the vehicle communication network allowing different electronic control units (ECUs) within the vehicle to exchange data,
- a power supply,
- light sources (3, 6, 8, 10), each controlled by a driver (2, 5, 7, 9) communicating with the vehicle via the data bus,
**characterised in that** it comprises a gateway (2') consisting of an ASIL B driver having UART control, connected to the vehicle data bus, and **in that** said gateway (2') manages at least one of the drivers (5, 7, 9) and this driver (5, 7, 9) managed by the gateway (2') is connected to the vehicle data bus only via the gateway (2').

2. Circuit arrangement according to claim 1, wherein the gateway (2') provides a failure detection for light sources.

3. Circuit arrangement according to any one of the preceding claims, wherein the gateway (2') provides a function activation of the lamp.

4. Circuit arrangement according to any one of the preceding claims, wherein light sources (3, 6, 8, 10) provide main functions selected among: a low beam, a high beam, daytime running lights/position lights, front turn indicators.

5. The circuit arrangement of claim 1, wherein the gateway (2') reduces the traffic on the vehicle data bus.

6. Circuit arrangement according to any one of the preceding claims, wherein drivers (5, 7, 9) from different suppliers are connected to the gateway (2').

7. Circuit arrangement according to any one of the preceding claims, wherein drivers (5, 7, 9) using different communication protocols are connected to the gateway (2').

8. **Vehicle lamp** using a circuit arrangement according to any one of the preceding claims.
